# EUROPÄISCHE PATENTSCHRIFT

(11) **EP 1 589 064 B1**
(45) Veröffentlichungstag und Bekanntmachung des Hinweises auf die Patenterteilung: **28.02.2007**
(21) Anmeldenummer: 05102688.8
(22) Anmeldetag: 06.04.2005
(51) Int. Cl.: C08J 9/42, C09J 7/02, C09J 133/08, B60R 16/02

(54) **Verwendung eines doppelseitig klebend ausgerüsteten Schaumstoff-Klebebands zum Befestigen von strukturierten Flachleitungen insbesondere auf Untergründen wie die Innenraum-Dekorteile eines Pkws, insbesondere Dachhimmel, Türseitenteil, Kofferraumdeckel**
Use of a double-sided self-adhesive foam tape for fixing structured ribbon cables, in particular to bases such as the interior lining of a motor vehicle, especially the roof, side of the doors, and lid of the boot
Utilisation d'un ruban auto-adhésif double face en mousse pour fixer des cables plats structurés, notamment sur des supports tels que les garnitures intérieures d'un véhicule, notamment le plafond, les portes latérales et le hayon

(30) Priorität: 21.04.2004 DE 102004019908
(43) Veröffentlichungstag der Anmeldung: 26.10.2005
(73) Patentinhaber: tesa AG, 20253 Hamburg (DE)
(72) Erfinder: Schwertfeger, Michael, 22147 Hamburg (DE)
(74) Vertreter: Stubbe, Andreas

(56) Entgegenhaltungen:
- WO-A-01/56777
- WO-A-20/05039006
- DE-A1- 19 910 730
- DE-A1- 19 940 229

## Beschreibung

Die Erfindung betrifft die Verwendung eines doppelseitig klebend ausgerüsteten Schaumstoff-Klebebands zum Befestigen von strukturierten Flachleitungen insbesondere auf Untergründen wie die Innenraum-Dekorteile eines Pkws, insbesondere Dachhimmel, Türseitenteil, Kofferraumdeckel im PKW-Innenraum.

In Fahrzeuginnenräumen von PKW werden Rundkabel aufgrund der zunehmenden Elektronik und des damit verbundenen größeren Platzbedarfs vermehrt durch so genannte Flachleitungen ersetzt. Diese Flachleitungen sind überwiegend entweder mit Folie zusammenkaschierte Kupferstreifen (FFC) oder Leiterbahnen in Form von dünnen, flexiblen gedruckten Schaltungen (FPC).

Um eine sichere dauerhafte Befestigung einer solchen, eher glatten Flachleitung im Dachhimmel eines PKW auch unter erschwerten Bedingungen sicherzustellen, das heißt zum Beispiel ein Autoleben lang unter Einfluss von Temperatur und Luftfeuchtigkeit, haben sich scherfeste, harzabgemischte Acrylat-Klebemassen bereits bewährt.

Neben den genannten Flachleitungen FFC und FPC, welche eine eher glatte und somit verklebungsfreudige Oberfläche besitzen sollen jetzt auch stärker strukturierte Leitungen, wie zum Beispiel extrudierte Flachleitungen, auch Rasterstegleitungen genannt, verwendet werden.
Diese haben wegen der Profilierung eine sehr schwierig zu verklebende Oberfläche.

Das gleiche gilt für kaschierte Flachleitungen (FFC) mit größeren Querschnitten zur Übertragung höherer Leistungen. Auch diese Leitungen sind deutlich profilierter als die bisher verwendeten.

Ein wichtiger Einflussfaktor auf die Haltbarkeit der Verklebung ist die Art und Weise, wie diese durchgeführt wird. Bisher können derart flexible Teile wie Flachleitungen in Dachhimmel noch nicht vollständig automatisch beklebt und montiert werden. Sehr oft wird das doppelseitige Klebeband zunächst in einem ersten Montageprozess abschnittsweise manuell auf die Flachleitungen geklebt. In einem weiteren, zweiten Montageprozess wird dann die Abdeckung entfernt und die Flachleitung zum Beispiel im Dachhimmel eines PKW manuell verklebt. Durch diese Vorgehensweise ist bisher eine sorgfältige Applikation des doppelseitigen Klebebandes hinreichend sichergestellt

Bei einer manuellen Montage ist es immer wichtig, dass die klebtechnischen Eigenschaften des Klebebandes den Montageprozess möglichst erleichtern. Selbstklebemassen sind daher immer druckempfindlich, da die Druckempfindlichkeit das wichtigste Wirkprinzip für die Verklebung ist. Diese ist aber oft sehr schwierig zu realisieren.
Es werden von der Klebmasse für die leichte Montage oft eine hohe Anfassklebkraft und hohe Sofortklebkräfte gefordert. Andererseits ist für die Dauerbelastung im Fahrzeugleben eine sehr scherfeste Klebmasse zur sicheren Befestigung der Flachleitung notwendig. Aus klebtechnischer Sicht sind dies widersprüchliche Anforderungen, die immer nur durch einen Kompromiss realisiert werden können.
Dadurch kommt dem Wirkprinzip des Andruckes immer eine besondere Bedeutung zu.

Um diesen aufwendigen Montageprozess wenigstens teilweise automatisieren zu können, gibt es erste Versuche, die Applikation des doppelseitigen Klebebandes mit Hilfe von entsprechenden Applikatoren wie Klebebanddispensern, die durch einen Roboter geführt werden, auf zum Beispiel den Dachhimmel eines PKW zu realisieren. Bei der Verklebung durch den Applikator soll die Abdeckung gleichzeitig entfernt werden. Dann besteht der anschließende manuelle Montageprozess nur noch aus dem Auflegen der Flachleitungen auf das Klebeband.

Durch diese Teil-Automatisierung stellt sich der manuelle Verklebungsprozess noch ungünstiger dar.

Die Verarbeiter haben nun nicht mehr die Möglichkeit, kurze Klebebandabschnitte sorgfältig an einem ergonomisch gestalteten Arbeitsplatz auf die entsprechend ausgerichteten und fixierten Flachleitungen zu verkleben. Die kompletten Flachleitungen müssen jetzt auf dem mit doppelseitigem Klebeband ausgerüsteten Dachhimmel ausgerichtet und angedrückt werden. Bei dieser großflächigen Arbeitsweise kann die Flachleitung wegen der erschwerten Zugänglichkeit nicht mehr in jedem Bereich so sorgfältig an das doppelseitige Klebeband angedrückt werden wie vorher bei der Verklebung von doppelseitig klebenden Klebebandabschnitten. Weiter erschwerend kommt hinzu, dass dieser Arbeitsprozess nun üblicherweise in einem Bereich mit wesentlich kürzeren Taktzeiten erfolgt.

Vor dem Hintergrund der bereits oben genannten aufkommenden stark profilierten Flachleitungen ist diese Art der teilautomatisierten Arbeitsweise beziehungsweise Verklebung mit bisher auf dem Markt befindlichen doppelseitigen Klebebändern nicht mehr realisierbar.

Vor dem Hintergrund der bereits oben genannten Versuche zur Teilautomatisierung der Verklebung von Flachleitern mit einem entsprechenden Applikator kommt auch der Abdeckung eine besondere Bedeutung zu.
Bei der Befestigung von Flachleitungen zum Beispiel in PKW-Dachhimmeln wird zunächst das doppelseitige Klebeband auf den Dachhimmel mit dem Applikator aufgebracht. Hierbei besteht die Aufgabe, dem Leitungsverlauf möglichst präzise folgen zu können. Die bei Flachleitungen notwendigen rechtwinkligen Verzweigungen lassen sich normalerweise nur durch Absetzen und erneutes Ansetzen nachkleben. Diese bedeutet entsprechend lange Zykluszeiten pro Verklebung, die auch bei einer Teil-Automatisierung besonders kritisch sind.
Diese Zykluszeiten lassen sich deutlich verkürzen, wenn das doppelseitige Klebeband in sehr engen Radien verklebt werden kann, und der Applikator so nicht bei jeder Abzweigung ab- und wieder angesetzt werden muss

Aus der DE 199 10 730 A1 ist ein Klebeband mit einem bandförmigen Laminatträger und mit einer ein- oder beidseitig aufgebrachten Kleberbeschichtung bekannt, wobei der bandförmige Laminatträger zumindest eine Schallisolationsschicht und eine Vliesschicht aufweist. Die Vliesschicht ist durch Luft- und/oder Wasserstrahlen vernadelt. Eingesetzt wird das Klebeband als Wickelband zur Bündelung von Kabeln in Automobilen.

Aufgabe der Erfindung ist es, ein Klebeband zur Verfügung zu stellen, das eine sichere Fixierung von strukturierten und/oder profilierten Flachleitungen insbesondere auf Untergründen wie die Innenraum-Dekorteile eines Pkws, insbesondere Dachhimmel, Türseitenteil, Kofferraumdeckel erlaubt, das einfach zu applizieren ist und das die aus dem Stand der Technik bekannten Nachteile nicht aufweist.

Gelöst wird diese Aufgabe durch die Verwendung eines doppelseitig klebend ausgerüsteten Schaumstoff-Klebebands, wie es im Hauptanspruch dargelegt ist. Weiterbildungen der erfindungsgemäßen Verfahren sind dabei Gegenstand der Unteransprüche.

Demgemäß betrifft die Erfindung die Verwendung eines doppelseitig klebend ausgerüsteten Klebebandes mit einer Trägerschicht aus PE-Schaum, wobei der PE-Schaum eine Stauchhärte von kleiner 300 kPa bei einer Stauchung von 50 % (gemessen nach ISO 844) aufweist, zur Befestigung von strukturierten und/oder profilierten Flachleitungen vorzugsweise im Innenraum von PKW.

Als Stauchhärte bezeichnet man eine Kraft, die notwendig ist, um einen Schaumstoff um eine bestimmte Höhe (50 % der Normalhöhe) zusammenzudrücken. Sie wird maßgeblich durch den molekularen Aufbau der Zellwände beeinflusst.

In einer ersten vorteilhaften Ausführungsform der Erfindung ist auf einer Seite des Klebebands eine Abdeckung vorhanden, die vorzugsweise aus einer LDPE-Folie besteht.

Liner aus LDPE sind als besonders anschmiegsam und flexibel bekannt, so dass diese umfassende Verwendung finden.

Weiter vorzugsweise bestehen die Klebmassen aus harzabgemischten Acrylatmassen, die eine hohe Scherfestigkeit aufweisen sollten.
Diese werden zum Beispiel im D. Satas [Handbook of Pressure Sensitive Adhesive Technology, 1989, Verlag VAN NOSTRAND REINHOLD, New York] erwähnt.

Eine vorteilhafte Weiterentwicklung verwendet eine Haftklebemasse,
- welche durch eine radikalische Polymerisation erhältlich ist,
- welche zu mindestens 65 Gew.-% auf zumindest einem acrylischen Monomer aus der Gruppe der Verbindungen der folgenden allgemeinen Formel basiert: 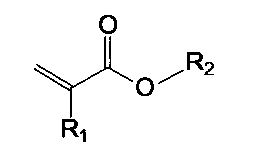
wobei R₁ = H oder CH₃ ist und der Rest R₂ = H oder CH₃ ist oder gewählt wird aus der Gruppe der verzweigten oder unverzweigten, gesättigten Alkylgruppen mit 2 bis 20, bevorzugt mit 4 bis 9 Kohlenstoffatomen,
bei welcher das mittlere Molekulargewicht der Haftklebemasse mindestens 650.000 beträgt,
und welche, sofern sie auf einen Träger aufgetragen ist, eine Vorzugsrichtung besitzt, wobei der in Vorzugsrichtung gemessene Brechungsindex n_{MD} größer ist als der in einer Richtung senkrecht zur Vorzugsrichtung gemessene Brechungsindex n_{CD}, und wobei die Differenz Δn = n_{MD} - n_{CD} mindestens 1x10⁻⁵ beträgt.

Als nicht ausschließliche Beispiele für Alkylgruppe, welche für den Rest R₂ in bevorzugter Weise Anwendung finden können, seien im folgenden genannt Butyl-, Pentyl-, Hexyl-, Heptyl-, Octyl-, Isooctyl-, 2-Methylheptyl-, 2-Ethylhexyl-, Nonyl-, Decyl-, Dodecyl-, Lauryl-, oder Stearyl(meth)acrylat oder (Meth)acrylsäure.

Weiterhin verläuft das Stanzverfahren ausgezeichnet bei Verwendung einer Haftklebemasse, welche zu bis zu 35 Gew.-% auf Comonomere in Form von Vinylverbindungen basiert, insbesondere auf eine oder mehrere Vinylverbindungen gewählt aus der folgenden Gruppe:
Vinylester, Vinylhalogenide, Vinylidenhalogenide, Nitrile ethylenisch ungesättigter Kohlenwasserstoffe.
Im Sinne der Verwendung fallen auch Acrylverbindungen mit funktionellen Gruppen unter die Bezeichnung "Vinylverbindung". Solche funktionelle Gruppen enthaltenden Vinylverbindungen sind Maleinsäureanhydrid, Styrol, Styrol-Verbindungen, Vinylacetat, (Meth)acrylamide, N-substituierte (Meth)acrylamide, β-Acryloyloxypropionsäure, Vinylessigsäure, Fumarsäure, Crotonsäure, Aconitsäure, Dimethylacrylsäure, Trichloracrylsäure, Itaconsäure, Vinylacetat, Hydroxyalkyl(meth)acrylat, aminogruppenhaltige (Meth)acrylate, hydroxygruppenhaltige (Meth)acrylate, besonders bevorzugt 2-Hydroxyethyl(meth)acrylat, 2-Hydroxypropyl-(meth)acrylat, und/oder 4-Hydroxybutyl(meth)acrylat und mit Doppelbindung funktionalisierte Photoinitiatoren; die vorstehende Aufzählung ist nur beispielhaft und nicht abschließend.

Für die Haftklebemassen ist es besonders vorteilhaft, wenn die Zusammensetzung der entsprechenden Monomere derart gewählt wird, dass die resultierenden Klebemassen entsprechend D. Satas [Handbook of Pressure Sensitive Adhesive Technology, 1989, Verlag VAN NOSTRAND REINHOLD, New York] haftklebende Eigenschaften besitzen. Hierfür sollte die Glasübergangstemperatur der Acrylathaftklebemasse zum Beispiel unterhalb 25 °C liegen.

Die für die Verwendung herangezogenen Haftklebemassen, insbesondere die vorstehend als vorteilhaft ausgelobten Polyacrylathaftklebemassen, werden bevorzugt durch eine radikalisch initiierte Polymerisation hergestellt. Ein hierfür sehr geeignetes Verfahren zeichnet sich durch die folgenden Schritte aus:
- Polymerisation eines Gemisches enthaltend zumindest ein Monomer auf Vinyl-, Acryl- oder Methacrylbasis oder eine Kombination dieser Monomere, wobei das mittlere Molekulargewicht der entstehenden Polymere oberhalb von 650.000 liegt,
- anschließender Extrusionsbeschichtung der Polymermasse ,
- anschließender Vernetzung der Polymermasse auf dem Träger durch Bestrahlung mit Elektronenstrahlen.

Die Extrusionsbeschichtung erfolgt dabei bevorzugt durch eine Extrusionsdüse. Die verwendeten Extrusionsdüsen können aus einer der drei folgenden Kategorien stammen: T-Düse, Fischschwanz-Düse und Bügel-Düse. Die einzelnen Typen unterscheiden sich durch die Gestalt ihres Fließkanals. Zur Herstellung von orientierten Acrylathaftklebemassen wird besonders bevorzugt mit einer Bügeldüse auf einen Träger beschichtet, und zwar derart, dass durch eine Relativbewegung von Düse zu Träger eine Polymerschicht auf dem Träger entsteht.
Die Zeitdauer zwischen der Beschichtung und der Vernetzung ist in günstiger Weise sehr gering, bevorzugt nicht größer als 10 s.
Durch die Ausformung des Acrylathotmelts in der Bügel-Düse sowie den Austritt aus der Düse mit einer bestimmten Filmdicke, durch die Reckung des Haftklebemassenfilms beim Übertrag auf das Trägermaterial auf eine dünnere Filmdicke und durch die anschließende Inline-Vernetzung wird die Orientierung erhalten.

Die freie radikalische Polymerisation kann in Gegenwart eines organischen Lösungsmittels oder in Gegenwart von Wasser oder in Gemischen aus organischen Lösungsmitteln und Wasser oder in Substanz durchgeführt werden. Bevorzugt wird so wenig Lösungsmittel wie möglich eingesetzt. Die Polymerisationszeit beträgt - je nach Umsatz und Temperatur - zwischen sechs und 48 h.
Bei der Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet. Für die Polymerisation in wässrigen Medien bzw. Gemischen aus organischen und wässrigen Lösungsmitteln werden zur Polymerisation die dem Fachmann zu diesem Zwecke bekannten Emulgatoren und Stabilisatoren zugesetzt. Als Polymerisationsinitiatoren werden übliche radikalbildende Verbindungen wie beispielsweise Peroxide, Azoverbindungen und Peroxosulfate eingesetzt. Auch Initiatorgemische können verwendet werden. Bei der Polymerisation können weitere Regler zur Molekulargewichtssenkung und Verringerung der Polydispersität eingesetzt werden. Als so genannte Polymerisationsregler können beispielsweise Alkohole und Ether verwendet werden. Das Molekulargewicht der Acrylathaftklebemassen liegt vorteilhaft zwischen 650.000 und 2.000.000 g/mol, mehr bevorzugt zwischen 700.000 und 1.000.000 g/mol.

In einer weiteren Vorgehensweise wird die Polymerisation in Polymerisationsreaktoren durchgeführt, die im allgemeinen mit einem Rührer, mehreren Zulaufgefäßen, Rückflusskühler, Heizung und Kühlung versehen sind und für das Arbeiten unter N₂-Atmosphäre und Überdruck ausgerüstet sind.

Nach der Polymerisation in Lösemittel kann das Polymerisationsmedium unter vermindertem Druck entfernt werden, wobei dieser Vorgang bei erhöhten Temperaturen, beispielsweise im Bereich von 80 bis 150 °C durchgeführt wird. Die Polymere können dann in lösemittelfreiem Zustand, insbesondere als Schmelzhaftkleber, eingesetzt werden. In manchen Fällen ist es auch von Vorteil, die erfindungsgemäßen Polymere in Substanz herzustellen.

Zur Herstellung der Acrylathaftklebemassen können die Polymere in üblicher Weise modifiziert werden. Beispielsweise können klebrigmachende Harze, wie Terpen-, Terpenphenol-, C₅-, C₉-, C₅/C₉-Kohlenwasserstoff-, Pinen-, Inden- oder Kolophoniumharze auch in Kombination miteinander zugesetzt werden. Weiterhin können auch Weichmacher, verschiedene Füllstoffe (zum Beispiel Fasern, Ruß, Zinkoxid, Titandioxid, Mikrovollkugeln, Voll- oder Hohlglaskugeln, Kieselsäure, Silikaten, Kreide, blockierungsfreie Isocyanate), Alterungsschutzmittel, Lichtschutzmittel, Ozonschutzmittel, Fettsäuren, Weichmacher, Keimbildner, Blähmittel und/oder Beschleuniger als Zusätze verwendet werden. Zusätzlich können Vernetzer und Promotoren zur Vernetzung beigemischt werden. Geeignete Vernetzer für die Elektronenstrahlvernetzung sind beispielsweise bi- oder multifunktionelle Acrylate, bi- oder multifunktionelle Isocyanate oder bi- oder multifunktionelle Epoxide.

Die reinen oder abgemischten Acrylathotmelts werden durch eine Düse mit variabler Schlitzbreite auf das Trägermaterial beschichtet und anschließend auf dem Träger mit Elektronenstrahlen gehärtet. Die Vernetzung erfolgt im Inline-Betrieb unmittelbar nach dem Auftragen der Haftklebemasse auf den Träger.

Besonders bevorzugt werden als Trägerschicht aus PE-Schäume eingesetzt, die eine Stauchhärte bei einer Stauchung von 50 % (gemessen nach ISO 844) kleiner 150 kPa aufweisen.

Weiter vorzugsweise lassen sich die eingesetzten PE-Schäume wie folgt charakterisieren:

| | | | |
|---|---|---|---|
| Raumgewicht [kg/m³] | | 50 bis 90 | bevorzugt 67 |
| Zugfestigkeit, längs [kPa] - ISO 1926 | | 800 bis 1000 | bevorzugt 895 |
| Reißdehnung, längs [%] - ISO 1926 | | 150 bis 200 | bevorzugt 180 |

| Stauchhärte [kPa] - ISO 844 | | | |
|---|---|---|---|
| | Stauchung 10% | 25 bis 45 | bevorzugt 36 |
| | Stauchung 25% | 50 bis 70 | bevorzugt 60 |
| | Stauchung 50% | 120 bis 160 | bevorzugt 140 |

Überraschend vorteilhaft lässt sich das erfindungsgemäße Klebeband mit den bekannten Applikatoren verspenden, die zudem durch Roboter bewegt werden.

Durch die geringe Stauchhärte ist der PE-Schaum besonders anschmiegsam und lässt sich im Verbund mit der elastischen LDPE-Abdeckung von den bekannten Applikatoren in sehr engen Radien verkleben. Dies bedeutet, der Leitungsverlauf kann durch den Applikator zum Beispiel auf einem PKW-Dachhimmel ohne den Zeitverlust durch das sonst notwendige Ab- und erneute Ansetzen nachgeklebt werden.

Durch die geringe Stauchhärte des PE-Schaums und die damit verbundenen sehr geringen Rückstellkräfte des Schaumes kann auch mit einer harzabgemischten Acrylat-Klebemasse mit hoher Scherfestigkeit , auch bei nur sehr kurzzeitigem geringen Andruck, ein spontan ausreichender Kontakt mit der zu verklebenden Oberfläche der neuartigen strukturierten und/oder profilierten Flachleitungen erreicht werden. Durch die geringen Rückstellkräfte des Schaums kann außerdem das viskoelastische Auffliesverhalten der Acrylat-Klebmasse voll wirken, ohne dass vorher Ablöseerscheinungen auftreten.
Dies ist insbesondere vorteilhaft, weil sich besagte Acrylatklebemassen aufgrund ihrer Eigenschaften seit vielen Jahren gerade in der Automobilindustrie für die Langzeitbefestigung von Teilen im PKW-Innenraum bewährt haben.

Die erfindungsgemäße Produktgestaltung gestattet dem Verarbeiter auch unter den vorgenannten schwieriger werdenden Arbeitsbedingungen für die Verklebung noch eine sichere spontane Befestigung der neuen strukturierten Flachleitungen ohne besondere Sorgfalt und sehr hohen Andruck auf dem PKW-Dachhimmel.

## Patentansprüche

1. Verwendung eines doppelseitig klebend ausgerüsteten Klebebandes mit einer Trägerschicht aus PE-Schaum, wobei der PE-Schaum eine Stauchhärte von kleiner 300 kPa bei einer Stauchung von 50 % (gemessen nach ISO 844) aufweist, zur Befestigung von strukturierten und/oder profilierten Flachleitungen.

2. Verwendung nach Anspruch 1, **dadurch gekennzeichnet, dass** auf einer Seite des Klebebands eine Abdeckung vorhanden ist

3. Verwendung nach Anspruch 1 oder 2, **dadurch gekennzeichnet, dass** die Klebmasse eine harzabgemischte Acrylat-Klebemasse mit hoher Scherfestigkeit ist.

4. Verwendung nach zumindest einem der Ansprüche 1 bis 3, **dadurch gekennzeichnet, dass** die Stauchhärte bei einer Stauchung von 50 % (gemessen nach ISO 844) kleiner 150 kPa ist.

5. Verwendung nach Anspruch 2, **dadurch gekennzeichnet, dass** die Abdeckung aus einer LDPE-Folie besteht.

6. Verwendung eines doppelseitig klebend ausgerüsteten Klebebandes nach zumindest einem der vorherigen Ansprüche zur Befestigung von strukturierten und/oder profilierten Flachleitungen im Innenraum von PKW.

## Claims

1. Use of a double-sided adhesive tape with a carrier layer made of PE foam, the PE foam having a compressive strength of less than 300 kPa under a compressive strain of 50% (measured in accordance with ISO 844), for fastening structured and/or profiled flat cables.

2. Use according to Claim 1, **characterized in that** a liner is on one side of the adhesive tape.

3. Use according to Claim 1 or 2, **characterized in that** the adhesive is a resin-blended acrylate adhesive possessing high shear strength.

4. Use according to at least one of Claims 1 to 3, **characterized in that** the compressive strength under a compressive strain of 50% (measured in accordance with ISO 844) is less than 150 kPa.

5. Use according to Claim 2, **characterized in that** the liner is composed of an LDPE film.

6. Use of a double-sided adhesive tape according to at least one of the preceding claims for fastening structured and/or profiled flat cables in the interior of passenger cars.

## Revendications

1. Utilisation d'un ruban adhésif double face comportant une couche de support en mousse de PE, la mousse de PE présentant une résistance en compression de moins de 300 kPa pour un écrasement de 50% (mesurée selon ISO 844), pour la fixation de câbles plats structurés et/ou profilés.

2. Utilisation suivant la revendication 1, **caractérisée en ce que** sur une face du ruban adhésif se trouve un recouvrement.

3. Utilisation suivant la revendication 1 ou 2, **caractérisée en ce que** la masse adhésive est une masse adhésive acrylique mélangée à une résine à haute résistance au cisaillement.

4. Utilisation suivant au moins l'une des revendications 1 à 3, **caractérisée en ce que** la résistance en compression pour un écrasement de 50% (mesurée selon ISO 844) est de moins de 150 kPa.

5. Utilisation suivant la revendication 2, **caractérisée en ce que** le recouvrement consiste en une feuille de LDPE.

6. Utilisation d'un ruban adhésif double face selon au moins l'une quelconque des revendications qui précèdent pour la fixation de câbles plats structurés et/ou profilés dans l'intérieur de véhicules.
